# EUROPÄISCHE PATENTSCHRIFT

(11) **EP 3 061 772 B1**
(45) Veröffentlichungstag und Bekanntmachung des Hinweises auf die Patenterteilung: **03.01.2018**
(21) Anmeldenummer: 16156437.2
(22) Anmeldetag: 19.02.2016
(51) Int. Cl.: C08B 37/08

(54) **SYNTHESEN VON CHITOSAN- UND CHITIN-AEROGELEN, DIE FUNKTIONELLE UREIDOGRUPPEN ENTHALTEN**
SYNTHESIS OF CHITOSAN AND CHITIN AEROGELS CONTAINING FUNCTIONAL UREIDO GROUPS
SYNTHESES D'AEROGELS DE CHITOSAN ET CHITINE COMPRENANT DES GROUPES UREIDO FONCTIONNELS

(30) Priorität: 25.02.2015 DE 102015203384
(43) Veröffentlichungstag der Anmeldung: 31.08.2016
(73) Patentinhaber: Deutsches Zentrum für Luft- und Raumfahrt e.V., 51147 Köln (DE)
(72) Erfinder: Ganesan, Kathirvel, 51147 Köln (DE); Ratke, Lorenz, 53757 St. Augustin (DE)
(74) Vertreter: dompatent von Kreisler Selting Werner - Partnerschaft von Patent- und Rechtsanwälten mbB

(56) Entgegenhaltungen:
- WO-A1-2014/178797
- GB-A- 2 042 570
- US-A1- 2006 223 965
- LI XUEBING ET AL: "Carbohydrate-Functionalized Chitosan Fiber for Influenza Virus Capture", BIOMACROMOLECULES, AMERICAN CHEMICAL SOCIETY, US , Bd. 12, Nr. 11 1. November 2011 (2011-11-01), Seiten 3962-3969, XP008152713, ISSN: 1525-7797, DOI: DOI:10.1021/BM200970X Gefunden im Internet: URL:http://pubs.acs.org/journals/bomaf6/in dex.html [gefunden am 2011-10-06]

## Beschreibung

Die vorliegende Erfindung bezieht sich auf neue Chitosan- und Chitin-Aerogele, die funktionelle Ureidogruppen enthalten, und auf ein Verfahren zur Herstellung dieser Aerogele.

Chitin ist das zweithäufigste Polymer in der Natur. Wegen seiner Erneuerbarkeit, Biokompatibilität, biologischen Abbaubarkeit und antimikrobiellen Eigenschaft wird es verbreitet in vielen Anwendungen einschließlich Biomedizin, Katalyse, Landwirtschaft und Reinigungs- und Trenntechniken verwendet. Chitosan ist eines der wichtigen Derivate von Chitin. Es kann durch Deacetylierung von Chitin hergestellt werden. Wenn der erreichte Deacetylierungsgrad größer als 50% ist (d.h. der Anteil an C(O)-CH₃ kleiner als 11,623 mäq/g ist), wird das Polymer "Chitosan" und ansonsten "Chitin" genannt. Chitosan ist in vielen Anwendungen aufgrund seiner Wasserlöslichkeit unter pKₐ 6,3 höchst wertvoll.

J. Mater. Chem., 2012, 22, 5801-5809, offenbart Chitin, das unter Verwendung von wässriger NaOH-Harnstoff-Lösung als Lösungsmittel und Ethanol als Koagulans zu nanoporösen Aerogelen verarbeitet wurde. Die Chitinlösung zeigte eine schnelle temperaturinduzierte Gelierung. Anschließend wurden hochgradig poröse und mechanisch feste Chitin-Aerogele durch Gelierung einer Chitinlösung aus Ethanol und anschließendes Trocknen mit überkritischem CO₂ hergestellt. Das Chitin-Hydrogel bestand aus einem perkolierenden Nanofibrillennetzwerk mit einer Breite von etwa 20 nm. Durch Verwendung der Trocknung mit überkritischem CO₂ wurde die Netzwerkstruktur in dem Hydrogel gut in dem Aerogel konserviert. Das hergestellte Aerogel weist eine geringe Dichte, große spezifische Oberfläche, mäßige thermische Stabilität und hohe physikalische Integrität bis 270 °C, signifikant hohe mechanische Eigenschaften und Biokompatibilität auf. Es wird gesagt, dass erwartet wird, dass die Ergebnisse zu potentiellen Anwendungen von Chitin-Aerogelen führen und die Herstellung von Biomaterialien, Wärme- oder Schallisolatoren, Katalysatorträgern und vielem anderen ermöglichen.

Aus WO 2014/178797 ist ein Aerogel bekannt, welches aus einem Netzwerk aus Polysaccharidfasern besteht, das mit einer hydrophoben Substanz verbunden ist, die Ureid-Funktionen enthalten kann.

US 4,267,313 A beschreibt ein Aerogel aus Polysacchariden (z. B. Chitosan), welches kovalent mit einem anorganischen Netzwerk verbunden ist, z. B. via Harnstoff.

US 2006/0223965 A1 offenbart entsprechende Chitin-Derivate, jedoch nicht in Form eines Aerogels.

Die Aerogele von Chitin und Chitosan können als antimikrobielles Mittel in Anwendungen wie Reinigungs- und Trenntechniken, Filtern, Klimaanlagen, Masken, Wundverbänden und medizinischem Pflaster oder Band-Aid verwendet werden. Um diese porösen Materialien in einer dieser Anwendungen effizient mit unterstützenden physikalisch-chemischen Eigenschaften zu verwenden, ist es notwendig, eine ausreichende Anzahl von aktiven funktionellen Gruppen aufzuweisen, was die Eigenschaften des Endprodukts definiert und verstärkt. Zum Beispiel hat Chitosan (definiert: > 50% NH₂-Gruppen und < 50% N-Acetylgruppen) mit seinen funktionellen Amingruppen, das hochgradig aktiv gegen Gram-negative Bakterien und weniger wirksam gegen Gram-positive Bakterien ist, Vorteile gegenüber Chitin. Chitin (definiert: < 50% NH₂-Gruppen und > 50% N-Acetylgruppen) unterscheidet sich von Chitosan dadurch, dass es hochgradig aktiv gegen Gram-positive Bakterien ist und keine nennenswerte Wirkung auf Gram-negative Bakterien hat (Biomacromolecules, 2003, 4(6), 1467-1465).

Biomacromolecules 2011, 12, 3962-3969, beweist, dass die Kohlenhydratfunktionalisierte Chitosanfaser (Durchmesser = 25 bis 50 µm) zum Abfangen von Influenzaviren verwendet werden kann. Die Oberflächen-funktionalisierten Glycoliganden in Chitosan-Mikrofasern können hier als Wirt wirken und an die Proteine von Influenzaviren binden und können das Wachstum effektiv hemmen und das Wassermedium effizient reinigen.

Im Vergleich zu dem oben zitierten Stand der Technik besteht das Ziel der Erfindung darin, nanoporöse Chitosan- und Chitinderivate, die aktive funktionelle Gruppen und eine hohe spezifische Oberfläche enthalten, bereitzustellen, welche effektiv gegen fast alle Mikroben verwendet werden können und effizient als antimikrobieller Filter/Reiniger verwendet werden können.

Das obige Ziel wird in einer ersten Ausführungsform der Erfindung durch Aerogele aus Chitosan oder Chitin erreicht, die dadurch gekennzeichnet sind, dass sie funktionelle Ureidogruppen enthalten.

Es war eine große Herausforderung, Materialien aus Derivaten von Chitin- und Chitosan-Aerogelen herzustellen, die genügend aktive funktionelle Gruppen aufweisen und gleichzeitig potentielle antimikrobielle Eigenschaften umfassen. Um dies zu erreichen, wurden die Aerogele aus Chitin- und Chitosanderivaten, die funktionelle Ureidogruppen aufweisen, durch ein neues und leichtes Verfahren synthetisiert. Funktionelle Ureidogruppen in einem Molekül sind als solche wohlbekannte antimikrobielle Mittel, die man in Wirkstoffen und Medikamenten als potentielle aktive Zentren findet. Gemeint sind hier insbesondere Ureidogruppen am N-Atom des Chitosans oder Chitins.

In einer weiteren Ausführungsform bezieht sich die vorliegende Erfindung auf ein Verfahren zur Herstellung von entsprechenden Aerogelen von Chitosan oder Chitin durch
a) Herstellen einer homogenen Lösung eines Gemischs aus Chitosan, Harnstoff und Säure durch Auflösen von Chitosan in einer wässrigen Lösung, die Harnstoff und die Säure enthält;
b) gegebenenfalls Filtern der in Schritt a) erhaltenen Lösung, letztendlich unter Inertgas;
c) Erhitzen der Lösung aus Schritt a) oder b), die mit Inertgas gesättigt ist, in einem geschlossenen Gefäß auf eine Temperatur von wenigstens 50 °C, vorzugsweise in einem Bereich von 60 bis 90 °C, während wenigstens 5 Stunden;
d) Abkühlen der Lösung auf Raumtemperatur (25 °C);
e) Überführen der Lösung gleichzeitig oder anschließend in einen Kunststoffbehälter, der unter Inertgas dicht verschlossen wird;
f) Einbringen des Behälters in einen Ofen und wiederum Erhitzen auf eine Temperatur von wenigstens 50 °C, vorzugsweise in einem Bereich von 60 bis 90 °C, zum Gelieren;
g) Neutralisieren des erhaltenen Gels durch eine Base und Waschen des Gels mit Wasser, bis das Gel neutral wird;
h) mehrmaliges Waschen des Gels mit Ethanol; und
i) Einsetzen eines Standardtrocknungsverfahrens unter überkritischen Bedingungen.

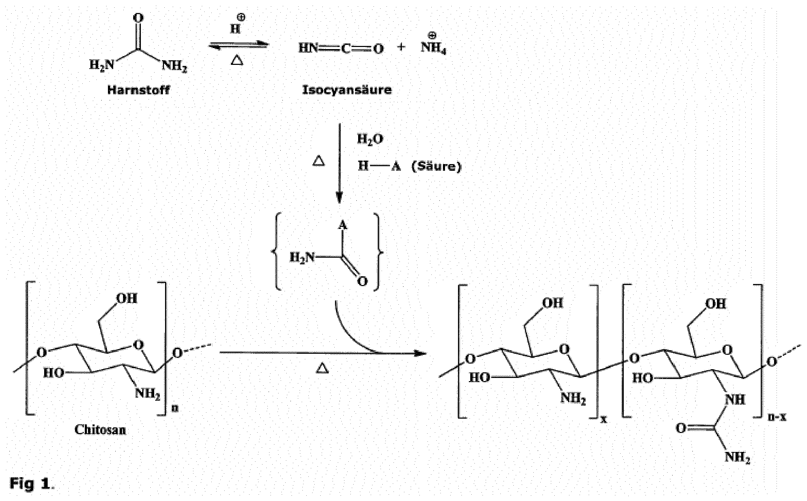

Erfindungsgemäß wurde ein neues grünes Verfahren für die Synthese der Aerogele von Chitin und Chitosan mit funktionellen Ureidogruppen, die sich im Gehalt an funktionellen Ureidogruppen unterscheiden, aufgezeigt. Das schematische Diagramm des Reaktionsmechanismus ist in Figur 1 gezeigt.

Das in diesen Studien eingesetzte Chitosan umfasst unterschiedliche Gehalte an funktionellen Amingruppen (ca. 75 bis 99%). In diesem Verfahren wurden Chitosan und Harnstoff in Gegenwart eines sauren wässrigen Mediums thermisch behandelt. Dabei wurde Harnstoff als Vorläufer für die in-situ-Erzeugung von instabiler Isocyansäure verwendet. Der nucleophile Angriff von Amingruppen aus Chitosan auf Isocyansäure ergab Ureido-funktionalisierte Chitosan- und Chitinderivate (siehe Figur 1). Das Hydrogel entsteht, wenn der Anteil an funktionellen Ureidogruppen mehr als 50% erreicht. Diese Reaktion verläuft schneller, wenn die lokale Sättigung der Isocyansäure hoch ist. Um eine lokale Sättigung zu erreichen, muss die Isocyansäure durch eine Säure in einem reaktiven Zwischenzustand stabilisiert werden. Die Stabilität dieser säurestabilisierten Isocyansäure als Zwischenstufe bestimmt die Geschwindigkeit der Reaktion und die Gelierungsdauer. Die Gelierungsdauer variiert von einigen Minuten bis mehrere Tage und hängt von drei Faktoren ab: der Art der verwendeten Säure und der Anzahl der verfügbaren sauren Protonen; dem Verhältnis von Säure und Harnstoff (1:1 bis 1:18); und der Temperatur des Reaktionsmediums (60 bis 90 °C).

### Der Einfluss der Art der Säure:

➢ Im Falle von Essigsäure erfolgte die Gelierung je nach der im Reaktionsmedium verwendeten Konzentration der Säure (0,33 bis 0,5 M) bei pH 5,0 bis 5,3, während die Gelierung im Falle von Salzsäure je nach der Konzentration der Säure ([HCl] = 0,33 bis 0,5 M) bei pH 6,5-7 erfolgte.
➢ Im Falle von mit Essigsäure stabilisierter Isocyansäure betrug die Reaktionszeit für einen Substitutionsgrad von 50% bei 70 °C 14 Stunden ([CH₃COOH]/[Harnstoff] = 1:6), während im Falle von mit Salzsäure stabilisierter Isocyansäure ein Substitutionsgrad von 50% nach 36 Stunden bei 70 °C erreicht wurde ([HCl]/[Harnstoff] = 1:6).

Phosphorsäure und Zitronensäure haben drei saure Protonen, die unterschiedliche pKₐ-Werte umfassen. Im Falle von Phosphorsäure erfolgt die Gelierung nur dann nach 8 Stunden, wenn eine dreimal so hohe Konzentration von Harnstoff wie von Essigsäure vorliegt ([H₃PO₄]/[Harnstoff] = 1:18).

Folglich ist die Verwendung einer nichtoxidierenden Säure hierbei bevorzugt.

Besonders bevorzugt ist die Auswahl einer speziellen Säure, und zwar Essigsäure, Chlorwasserstoffsäure und Phosphorsäure. Isocyansäure ist eine Zwischenstufe, die in situ aus der Quelle Harnstoff während der Zersetzung bei oder über 70 °C erzeugt wird. So wird Isocyansäure nicht als Reagens verwendet, um den Chitosan-Vorläufer aufzulösen.

### Um das Syntheseverfahren klar zu machen:

(1) Harnstoff ist die Quelle von Isocyansäure, mit der die Amingruppen aus Chitosan reagieren und funktionelle Ureidogruppen bilden können.
(2) Wasser ist ein gutes Lösungsmittel für die Zersetzung von Harnstoff unter Bildung von Isocyansäure, insbesondere bei oder über 60 °C.
(3) In diesem Syntheseverfahren wird eine wässrige Lösung der organischen oder anorganischen Säure (z.B. Essigsäure, Chlorwasserstoffsäure, Phosphorsäure, Maleinsäure, Zitronensäure, Gluconsäure, Milchsäure und einige Fettsäuren, wie Hexansäure usw.) als Lösungsmittel verwendet, um den Vorläufer Chitosan vollständig aufzulösen, damit er eine effektive Reaktion mit Isocyansäure eingeht. Es wird hiermit bestätigt, dass die verwendeten Säuren die Polymerkette des Chitosans nicht zerstören.
(4) Isocyansäure kann bei dieser Reaktionstemperatur (insbesondere bei oder über 70 °C) als hochgradig instabiles Gas existieren. Es wird vorgeschlagen, dass die Differenz in der Reaktionszeit, die zwischen verschiedenen Säurelösungen (z.B. Chlorwasserstoffsäure und Essigsäuremedium) existiert, von der Stabilität der Isocyansäure in der Lösung als stabile Zwischenstufe (erwähnt in Figur 1) abhängig sein kann.

### Der Einfluss der molaren Konzentrationen von Säure und Harnstoff:

Die Gelierung erfolgt schnell, wenn die Differenz in der molaren Konzentration von Harnstoff mit Säure höher ist bis zum Sättigungsgrad von Harnstoff in saurer Lösung. Dies bedeutet, dass die Gelierungszeit hauptsächlich von der Zersetzung von Harnstoff und der lokalen Konzentration der erzeugten Isocyansäure abhängt.
➢ Zum Beispiel im Falle eines Gemischs von Essigsäure und Harnstoff bei 70 °C erfolgt die Gelierung in ungefähr 32 Stunden, wenn das Stoffmengenverhältnis von [CH₃COOH]/[Harnstoff] = 1:3 ist, während die Reaktionszeit für die Gelierung ca. 8 Stunden 30 Minuten beträgt, wenn das Stoffmengenverhältnis von [CH₃COOH]/[Harnstoff] = 1:12 ist.

Die Menge der Säure oder des Säuregemischs kann in einem weiten Bereich variiert werden. Die Menge der Säure, die vorzugsweise verwendet wird, um 2 Gew.-% Chitosan aufzulösen, sollte jedoch in einem Bereich von 0,2 bis 0,7 M relativ zu der Menge des Chitosans oder Chitins liegen. Unterhalb von 0,2 M der Säure kann die Löslichkeit des Chitosanpolymers in Wasser mäßig sein. Wenn der Gew.-%-Wert des Chitosans reduziert wird, kann die Konzentration der Säure auf unter 0,2 M reduziert werden.

Der bevorzugte Bereich des pH-Werts der homogenen Lösung beträgt also 0,5 und weniger als 6, insbesondere bis zu einem Wert von 2,0 bis 5,5. Der pKₐ-Wert der NH₂-Gruppen (Aminogruppen) in Chitosan beträgt bekanntermaßen ca. 6,5. Wenn eine klare wässrige Lösung von Chitosan gewünscht wird, ist es notwendig, die Amingruppen in Chitosan mit einer sauren Lösung zu protonieren. So sollte der pH-Wert der Lösung vorzugsweise unter 6 liegen.

Außerdem ist ein Stoffmengenverhältnis von Säure zu Harnstoff von 1:1 bis 1:≥24, insbesondere von 1:3 bis 1:18, bevorzugt. Experimente im Bereich des Stoffmengenverhältnisses von Säure zu Harnstoff (1:1 bis 1:≥24) wurden durchgeführt. Die erwartete Reaktion erfolgt. Insbesondere 1:3 bis 1:18 ist zu bevorzugen, da die monolithische Form der Aerogelproben nicht zerstört wurde, und keine Luftblasen beobachtet wurden. Die physikalischen Eigenschaften sind erheblich gut und zeigen fast dieselbe Eigenschaft.

### Der Einfluss der Reaktionstemperatur:

Die Temperatur des Reaktionsmediums hat in der Gelierungszeit großen Einfluss, da die Zersetzungsgeschwindigkeit von Harnstoff in Wasser direkt von der Temperatur der Lösung beeinflusst wird.
➢ Zum Beispiel im Falle von [CH₃COOH]/[Harnstoff] = 1:6 erfolgt die Gelierung bei 70 °C langsamer (14 Stunden) als bei 80 °C (8 Stunden).

Der bevorzugte Bereich für die Reaktionstemperatur wird also auf eine Reaktionstemperatur von wenigstens 50 °C, vorzugsweise im Bereich von 60 °C bis 90 °C, insbesondere von wenigstens 70 °C bis 80 °C, eingestellt.

Unter 70 °C ist die Zersetzungsgeschwindigkeit von Harnstoff sehr gering. Zum Beispiel wird die Reaktionszeit zur Herstellung von Ureido-funktionalisiertem Chitin bei 60 °C viele Tage lang verzögert.

Oberhalb einer Reaktionstemperatur von 85 °C ist die Zersetzungsgeschwindigkeit von Harnstoff sehr hoch. Sie führt zur Erzeugung von mehr Zersetzungsprodukten: HNCO, NH₃ und CO₂-Gas. Die erzeugten Gase schädigen das Gelmedium und ergeben unzureichende Proben.

In einer bevorzugten Ausführungsform der Erfindung ist das Aerogel durch einen Substitutionsgrad von funktionellen Ureidogruppen im Bereich von 1 bis 65% gekennzeichnet. Die Menge in "Substitutionsgrad einer funktionellen Gruppe (Ureidogruppe)" bezieht sich auf ein Polymer. In diesem Fall ist zu berücksichtigen, dass das Chitosan 100% NH₂-Gruppen und keine -NH-C(O)-CH₃-Gruppe aufweist. Wenn der Anteil an funktionellen Ureidogruppen im Bereich von 1 bis <50% liegt, wird das Produkt "Ureido-Chitosan-Aerogel" genannt (d.h. der Prozentanteil von C(O)-NH₂ liegt im Bereich von 0,2272 mäq/g bis < 11,36 mäq/g). Wenn der Anteil an funktionellen Ureidogruppen im Bereich über 50% liegt, wird das Produkt "Ureido-Chitin-Aerogel" genannt (d.h. der Prozentanteil von C(O)-NH₂ liegt oberhalb 11,36 mäq/g). Der maximal erreichbare Substitutionsgrad von funktionellen Ureidogruppen liegt je nach der Wahl der Säure im Bereich von > 11,36 mäq/g ≤ 15,15 mäq/g (50 bis 66%).

### Charakterisierungstechniken:

Die Produkte wurden durch Rohdichtemessung (Micromeritics - GeoPyc 1360), Reindichtemessung (Micromeritics - Accupyc II 1340; Gaspyknometer - Helium), BET-Stickstoff-Adsorptions-Desorptions-Isothermenanalyse (Micromeritics-Tristar II 3020), Fourier-Transform-Infrarotspektroskopie (FTIR; Bruker-Tensor 27 Instrument) und Rasterelektronenmikroskopie (SEM: Merlin - Carl Zeiss Mikroskop; goldbedampfte Proben) charakterisiert. Die XRD-Messungen an monolithischen und Pulverproben wurden mit einem Bruker-D8-DISCOVER-Diffraktometer unter Verwendung von Cu-Kα-Strahlung (λ = 1,54 Å) durchgeführt. Für alle Synthesen und Waschvorgänge wurde deionisiertes Wasser eingesetzt. Ethanol wurde als geeignetes Lösungsmittel verwendet, um Wasser in Hydrogelen zu ersetzen. Ethanol wirkt als gutes Lösungsmittel, um das überkritische Trocknungsverfahren zu durchlaufen. Festkörper-NMR-Analysen wurden mit einem Bruker-400-WB-Spektrometer, das bei einer Protonenfrequenz von 400,13 MHz arbeitet, durchgeführt. NMR-Spektren wurden mit cp- und protonenentkoppelten sp-Pulssequenzen unter den folgenden Bedingungen aufgenommen:¹³C-NMR-Frequenz = 100,48 MHz, π/2-Puls 3,7 µs, Entkopplungslänge 6,3 µs, Wiederholrate: 60 s, 2000 Scans. Die Proben wurden in 4-mm-Zirconiumoxid-Rotoren gepackt, die unter Luftstrom mit 8 kHz rotieren gelassen wurden. Adamantan (δ_{CH} bei 38,5 ppm) wurde als externer sekundärer Standard verwendet.

### Charakterisierung durch FTIR und Pulverröntgenbeugung:

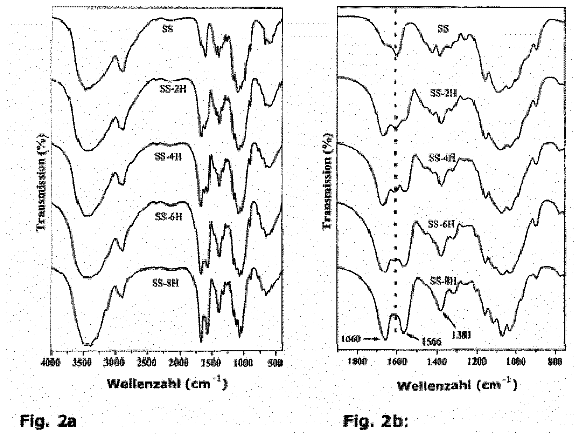

Der Reaktionsvorgang und der Grad der Bildungen von funktionellen Ureidogruppen wurden verfolgt, in dem man die Zwischenprodukte in gleichmäßigen Abständen entnahm, bis die Gelierung erfolgte (8 Stunden bei 80 °C in wässriger Essigsäure (siehe Bezugsbeispiel 1)). Die Lösungen wurden entnommen, neutralisiert und mit Wasser und Ethanol gewaschen. Dann wurde das nasse Pulver im Vakuum bei 60 °C getrocknet. Die Proben wurden durch FTIR und Pulverröntgenbeugung analysiert, und die Daten wurden mit denen der aus dem Gel entnommenen Probe verglichen (Gelierungszeit 8 Stunden in einem sauren wässrigen Medium). Die FTIR-Daten werden in Figur 2a und Figur 2b miteinander verglichen.

Das IR-Spektrum von Chitosan aus Garnelenschalen (SS) weist 98-99% funktionelle NH₂-Gruppen auf (M. Miya, R. Iwamoto, S. Yoshikawa, S. Mima, Int. J. Biol. Macromol., 1980, 323). Der Schulterpeak bei 1655 cm⁻¹ wird 1-2% -NH-C(O)-CH₃-Gruppen zugeordnet. Die Schwingungsbande bei 1600 cm⁻¹ wird der NH₂-Gruppe zugeordnet, was durch eine vertikale gepunktete Linie angezeigt ist. Dieses Spektrum wurde mit den Spektren von SS-2H, SS-4H, SS-6H und SS-8H verglichen Dabei bedeutet SS-2H, dass Chitosan aus Garnelenschalen 2 Stunden lang in dem Reaktionsmedium ([CH₃COOH]/[Harnstoff] = 1:6) eingesetzt wurde. Die Bildung von Ureido-Derivaten von Chitosan und Chitin wurde durch Verfolgung der Schwingungsbanden der Ureidogruppe -NH-C(O)-NH₂ bestätigt. Durch Verlängerung der Reaktionszeit verschwindet die Schwingungsbande der NH₂-Gruppe wegen des Wachstums von drei Banden von der Gruppe -NH-C(O)-NH₂, die bei 1660 cm⁻¹ (-C(O)-), 1566 cm⁻¹ (-NH) und 1381 cm⁻¹ (-C-N) zugeordnet werden. Die Schwingungsbanden zwischen 950 cm⁻¹ und 1150 cm⁻¹ stammen von den funktionellen Alkoholgruppen -C-OH. Aufgrund des Unterschieds in der Wasserstoffbrückenbindung die orientierte Organisation von Polymerketten und Kristallinität während der Fällung. In diesem Bereich (950 bis 1150 cm⁻¹) wandelten sich die Chitosanbanden langsam in die charakteristischen Chitinbanden um.

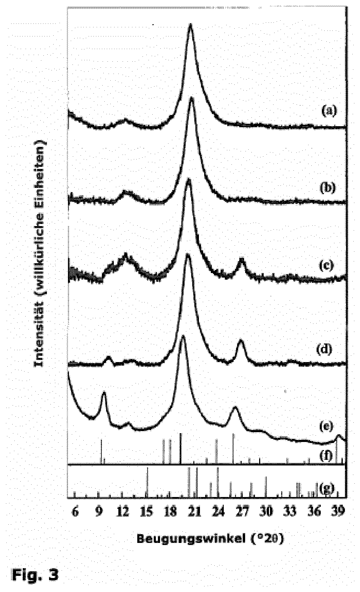

Diese Umwandlung der Kristallinität von Chitosan zu Chitin während der Bildung von Ureido-Derivaten wird durch Pulverröntgenbeugung bestätigt (Figur 3). Die Veränderung des Beugungsmusters wurde beobachtet, als die Reaktionszeit von 2 zu 8 Stunden zunahm. Der Peak bei 20,5 gehört zum Ureido-Derivat von Chitosan (Figur 3a). Dieser Peak verschiebt sich nach 19,5, wenn die Fällung bei 8 Stunden erfolgt (Figur 3e). Es gibt zwei weitere Peaks, die bei 9,6 und 26,3 auftreten. Die Pulver-XRD-Daten weisen die Veränderung der Kristallinität aufgrund der Änderung der chemischen Umgebung und den Unterschied in der orientierten Organisation von Polymerketten im Einklang mit den FTIR-Daten nach.

Vergleich der Pulver-XRD-Daten von Ureido-Derivaten von Chitosan und Chitin: (a) SS-2H; (b) SS-4H; (c) SS-6H; (d) SS-7H; (e) SS-8H; (f) und (g) sind Beugungsmuster von reinem Chitin bzw. reinem Chitosan. Nach 8 Stunden Reaktionszeit wird die Lösung undurchsichtig und bildet ein Gel.

Der Vergleich von FTIR-Spektren in Figur 2 des Ureido-Derivats von Chitosan, das in Gegenwart von Essigsäure hergestellt wurde, unterscheidet sich in ihrem Substitutionsgrad durch Variieren der Reaktionszeit. SS = Chitosan aus Garnelenschalen, das 99% NH₂-Gruppen und 1% -NH-C(O)-CH₃-Gruppen enthält. Die Reaktionszeit wird nach SS gezeigt. Zum Beispiel bedeutet SS-2H, dass Chitosan aus Garnelenschalen 2 Stunden lang in dem Reaktionsmedium ([CH₃COOH]/[Harnstoff] = 1:6) eingesetzt wurde. Nach 8 Stunden Reaktionszeit wird die Lösung undurchsichtig und bildet ein schwaches Gel. Die vergrößerten Auftragungen (1900 bis 750 cm⁻¹) der FTIR-Spektren sind auf der rechten Seite gezeigt. Die vertikale gepunktete Linie in der Auftragung auf der rechten Seite zeigt die Schwingungsbande der NH₂-Gruppen bei 1600 cm⁻¹ an. Durch Verlängerung der Reaktionszeit verschwindet die Schwingungsbande der NH₂-Gruppe wegen des Wachstums von drei Banden von der Gruppe -NH-C(O)-NH₂, die bei 1660 cm⁻¹ (-C(O)-), 1566 cm⁻¹ (-NH) und 1381 cm⁻¹ (-C-N) zugeordnet werden.

Figur 4 zeigt einen Vergleich mit einem speziellen Stoffmengenverhältnis ([CH₃COOH]/[Harnstoff] = 1:6) und (b) Chlorwasserstoffsäure ([HCl]/[Harnstoff] = 1:6), die mit Chitosan (Standard) verglichen werden.

Figur 5 zeigt einen Vergleich der rasterelektronenmikroskopischen Aufnahmen von Ureido-Derivaten von Chitin-Aerogel, die in Gegenwart von Essigsäure (a) und Chlorwasserstoffsäure (b) hergestellt wurden.

### Beispiele:

### Bezugsbeispiel 1:

### Synthese von Ureido-Derivaten von Chitosan und Chitinpulver unter Verwendung von verdünnter Essigsäure als Lösungsmittel

Eine homogene Lösung eines Gemischs von Chitosan, Harnstoff und Essigsäure wurde hergestellt, indem man Chitosan (2 g) in 98 g einer wässrigen Lösung, die Harnstoff (18 g) und Essigsäure (3 ml) enthielt, löste. Dabei beträgt das Stoffmengenverhältnis zwischen Säure und Harnstoff 1:6. Die viskose Lösung wurde durch Whatman-Filterpapier filtriert, mit Inertgas (N₂- oder Ar-Gas) gesättigt und dann in einem Rundkolben verschlossen. Die klare Lösung wurde unter Rühren (1000 U/min) auf 80 °C erwärmt. Nach 8 Stunden wurde die Reaktion abgebrochen, und die Lösung wurde trübe. Der pH-Wert der Lösung betrug 5,1 bis 5,3. Das Gemisch wurde mit 100 ml Natronlauge (2 M) behandelt und etwa 16 Stunden lang gerührt. Der Niederschlag wurde durch Filtration aufgefangen und mehrmals mit Wasser gewaschen, bis das Filtrat den neutralen pH-Wert aufweist. Der Niederschlag wurde mit Ethanol (2 x 25 ml) und Aceton (1 x 25 ml) gewaschen. Das Pulver wurde 24 Stunden lang in einem Vakuumofen bei 60 °C getrocknet.

### Beispiel 1:

### Synthese von Ureido-Derivaten von monolithischem Chitin-Aerogel unter Verwendung von verdünnter Essigsäure als Lösungsmittel.

Eine homogene Lösung eines Gemischs von Chitosan, Harnstoff und Essigsäure wurde hergestellt, indem man Chitosan (2 g) in 98 g einer wässrigen Lösung, die Harnstoff (18 g) und Essigsäure (3 ml) enthielt, löste. Dabei beträgt das Stoffmengenverhältnis zwischen Säure und Harnstoff 1:6. Die viskose Lösung wurde durch Whatman-Filterpapier filtriert, mit Inertgas (N₂- oder Ar-Gas) gesättigt und dann in einem Rundkolben verschlossen. Die klare Lösung wurde unter Rühren (1000 U/min) auf 80 °C erwärmt. Nach 6,5 Stunden wurde die klare Lösung auf Raumtemperatur abgekühlt, unter einem Inertgasstrom in den Polypropylen-Behälter übergeführt und dicht verschlossen. Der Behälter wurde in einen Ofen gebracht und auf 80 °C erwärmt. Während der Gelbildung verwandelt sich die klare transparente Lösung in durchscheinend und undurchsichtig. Die Gelierung wurde bestätigt, indem man den Behälter auf den Kopf kippte. Der pH-Wert des undurchsichtigen Gels betrug etwa 5,1 bis 5,3. Das Gel wurde mit 2 M Natronlauge neutralisiert und mehrmals mit deionisiertem Wasser gewaschen, bis der pH-Wert der klaren Flüssigkeit oberhalb des Gels neutral wird. Das saubere Hydrogel wurde fünfmal mit Ethanol gewaschen, und schließlich wurde das Gel in Ethanolmedium bei dem Vorgang des überkritischen Trocknens eingesetzt, um die Chitin-Aerogele zu erhalten.

### Charakterisierung durch FTIR und Pulverröntgenbeugung:

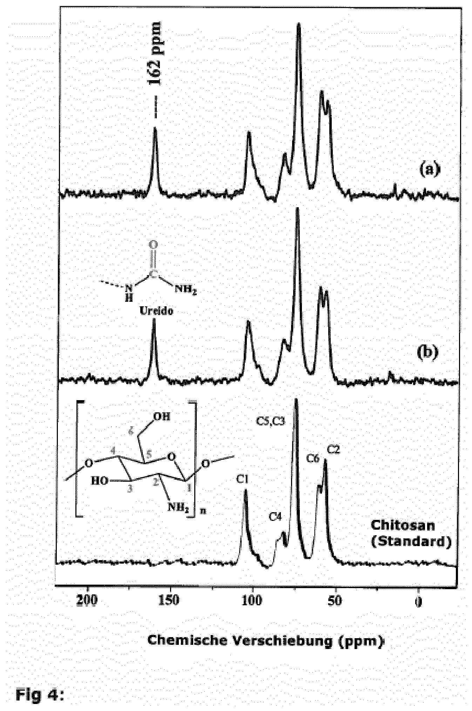

Die Daten des Ureido-Derivats von Chitin-Aerogelen aus verschiedenen sauren Medien zeigten keinen Unterschied gegenüber den Daten, die von einer Pulverprobe nach 8 Stunden bei 80 °C erhalten wurden (siehe Bezugsbeispiel 1). Charakterisierung durch Festkörper-¹³C-NMR und SEM:
Das Festkörper-¹³C-CPMAS-NMR des Ureido-Derivats von Chitin-Aerogelen, das aus Essigsäure ([CH₃COOH]/[Harnstoff] = 1:6) und Chlorwasserstoffsäure ([HCl]/[Harnstoff] = 1:6) als Medium erhalten wurde, wurde mit Chitosan-Pulver verglichen (Figur 4). Das Signal bei 162 ppm wurde der funktionellen Carbonylgruppe im Ureido-Derivat (-NH-C(O)-NH₂) von Chitin zugeordnet. Die Integration der funktionellen Gruppen und die Berechnung des Verhältnisses der Fläche unter dem Signal zwischen der -C(O)-Gruppe und den Kohlenstoffatomen C1 bis C6 im Kohlenhydratring kann die quantitative Menge der Anwesenheit des Grades von funktionellen Ureidogruppen liefern. Die Integrationswerte sind in Tabelle 1 gezeigt. Sie zeigt, dass der Grad der funktionellen Ureidogruppen im Falle von Chitin-Aerogel aus Essigsäuremedium etwa 66% beträgt, während der Grad der funktionellen Ureidogruppen im Falle von Chitin-Aerogel aus Chlorwasserstoffsäuremedium etwa 54% beträgt.

**Tabelle 1: Die ¹³C-NMR-Resonanzsignale mit der Zuordnung von funktionellen Gruppen und den Integrationswerten.**

| Signalposition δ (ppm) | Zuordnung von funktionellen Gruppen | Integrationswerte im Falle von [CH₃COOH]/[Harnstoff] = 1:6 | Integrationswerte im Falle von [H_{Cl}]/ [Harnstoff] = 1:6 |
|---|---|---|---|
| 162 | -C(O)- | 0,66 | 0,54 |
| 105-104 | C1 | 0,94 | 0,99 |
| 83,1 | C4 | 3 | 2,93 |
| 75,6 | C3 und C5 | | |
| 61,3 | C6 | 2,27 | 2,05 |
| 57,7 | C2 | | |

Der Vergleich von protonenentkoppelten sp-¹³C-NMR-Spektren von Ureido-Derivaten von Chitin-Aerogel, das aus (a) Essigsäure hergestellt ist. Um den Unterschied im Anteil von funktionellen Ureido-Gruppen zu analysieren, gibt es nur wenige Punkte, die berücksichtigt werden müssen. Im Falle von Essigsäuremedium tritt die Gelierung bei pH 5,1 bis 5,3 auf, d.h. unterhalb des pKₐ-Werts der NH₂-Gruppe (pKₐ = 6,3), wobei die Amingruppen protoniert werden, während die Gelierung im Falle von Chlorwasserstoffsäure durch die Abwesenheit einer protonierten Amingruppe erst bei pH 6,5 bis 7,0 auftritt, oberhalb des pKₐ-Werts der NH₂-Gruppe. In Essigsäuremedium erfolgt die Reaktion schneller (Gelierungszeit ca. 14 Stunden bei 70 °C) als dieselbe Reaktion in Chlorwasserstoffsäuremedium (Gelierungszeit ca. 36 Stunden bei 70 °C). Anscheinend kann Essigsäure Isocyansäure wegen der flüssigen Natur von Essigsäure bei 70 °C stabilisieren, aber Chlorwasserstoffsäure kann bei 70 °C zu Dampf destabilisiert werden.

In Anbetracht der Gelierungszeit, der Stabilität der Isocyansäure in Gegenwart von Essigsäure und der Verfügbarkeit von protonierten funktionellen Amingruppen unterhalb pH 5,1 bis 5,3 wurde der Schluss gezogen, dass das Polymer aufgrund der Unlöslichkeit des Chitinpolymers bei pH 5,1 bis 5,3 aus der Lösung regeneriert wird, wenn der Anteil der funktionellen Ureidogruppen den Wert von etwa 66% erreicht. Im Falle von Chlorwasserstoffsäuremedium kann das Polymer wegen der Abwesenheit einer protonierten Amingruppe bei pH 6,5 bis 7,0, der Instabilität von Isocyansäure und der Unlöslichkeit des Chitinderivats aus der Lösung regeneriert werden.

### Charakterisierung von Aerogelen durch Rasterelektronenmikroskopie, BET und Dichteanalysator:

Die aus BET und Dichteanalysator erhaltenen Daten sind in Tabelle 2 zusammengefasst. Die aus Essigsäuremedium erhaltenen Aerogele zeigten mehr Schrumpfung als Aerogel aus Chlorwasserstoffsäuremedium. Der Grund dafür ist, dass das Hydrogel aus Essigsäuremedium einen pH-Wert von etwa 5,1 bis 5,3 aufweist, während der pH-Wert des Hydrogels aus Chlorwasserstoffsäuremedium 6,5 bis 7,0 beträgt. Während der Behandlung mit 2 M Natronlauge schrumpft das Hydrogel aus Essigsäuremedium stärker als das Hydrogel aus Chlorwasserstoffsäuremedium. Dies bestätigt indirekt, dass bei pH 5,1 bis 5,3 die Amingruppen protoniert sind. Das unterschiedliche Schrumpfungsverhalten spiegelt sich in der Rohdichte und der Porosität des Materials wider. Die spezifische Oberfläche nach BET zeigt keine größeren Unterschiede, und die Werte liegen im Bereich von 272 bis 291 m²/g. Dies bedeutet, dass die Faserdicke für beide Aerogele, die aus unterschiedlichen sauren Medien erhalten wurden, fast dieselbe ist.

**Tabelle 2: Die physikalischen Eigenschaften von Aerogelen, die aus Essigsäure- und Chlorwasserstoffsäuremedium erhalten wurden. Das Verhältnis von Säure zu Harnstoff beträgt 1:6.**

| Saures Medium | Schrumpfung | Rohdichte | BET | Porosität |
|---|---|---|---|---|
| Essigsäure | 51,8% | 70 g/l | 291 m²/g | 93% |
| Chlorwasserstoffsäure | 40,8% | 47,3 g/l | 272 m²/g | 95% |

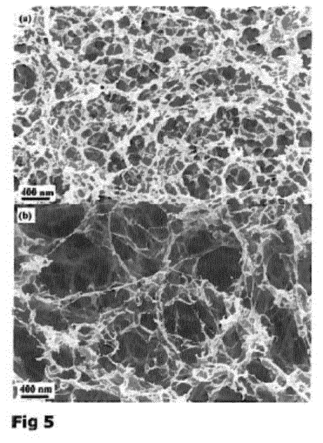

Die Bilder vom Rasterelektronenmikroskop sind in Figur 5 gezeigt. Die Struktur aus miteinander verbundenen Fasern wurde beobachtet, und die Faserdicke liegt im Bereich von 11 bis 13 nm. Im Einklang mit den in Tabelle 2 gezeigten Daten weist das aus Essigsäure erhaltene Aerogel eine kürzere Faserlänge, eine engere Porengrößenverteilung und eine kleinere Anzahl von Makroporen auf als das aus Chlorwasserstoffsäure erhaltene Aerogel, bei dem die meisten Poren größer als 50 nm sind, d.h. eine makroporöse Struktur, und die Faserlänge größer als 1 µm ist.

### Beispiel 2:

### Synthesen von Chitosan-Aerogelen, die funktionelle Ureidogruppen enthalten

Die Chitosanlösungen, die funktionelle Ureidogruppen enthalten, wurden nach dem in Bezugsbeispiel 1 angegebenen Verfahren hergestellt. Diese Lösungen (20 ml) wurden mit 4 M Natronlauge (40 ml) geschichtet und über Nacht ungestört gelassen. Die Natronlauge diffundiert durch die Chitosanlösung, neutralisiert und regeneriert die Chitosanfasern, die funktionelle Ureidogruppen aufweisen. Das Hydrogel wurde mehrmals mit Wasser gewaschen, bis der Überstand einen neutralen pH-Wert aufweist, und dann mit Ethanol (5 mal). Überkritisches Trocknen der Alkogele ergab Aerogele von Chitosan, die funktionelle Ureidogruppen enthalten.

### Schlussfolgerung:

Die Synthesen von Chitosan- und Chitin-Aerogelen, die funktionelle Ureido-gruppen enthalten, wurden demonstriert. Bei diesem verfahren wurde Harnstoff als Quelle von Isocyansäure verwendet, die leicht mit nucleophilen Gruppen -NH₂) in Chitosan reagieren kann. Durch diese Reaktion können je nach dem sauren Medium maximal bis zu 50 bis 66% Anteil an funktionellen Ureidogruppen erreicht werden. Durch Variieren des Anteils der funktionellen Ureidogruppen in der Polymerkette kann sie zweckmäßigerweise als antimikrobielles Mittel und für die Herstellung von Biomaterialien, als Wärme- oder Schallisolator, Katalysatorträger verwendet werden, die antimikrobiellen Mittel insbesondere in Anwendungen wie Reinigungs- und Trenntechniken, Filtern, Klimaanlagen, Masken, Wundverbänden und medizinischem Pflaster oder Band-Aid.

## Patentansprüche

1. Aerogele von Chitosan oder Chitin, **dadurch gekennzeichnet, dass** sie funktionelle Ureidogruppen enthalten.

2. Aerogele von Chitosan oder Chitin gemäß Anspruch 1, **dadurch gekennzeichnet, dass** sie einen Substitutionsgrad von funktionellen Ureidogruppen im Bereich von 1 bis 65% enthalten.

3. Verfahren zur Herstellung von Aerogelen von Chitosan oder Chitin durch
a) Herstellen einer homogenen Lösung eines Gemischs aus Chitosan, Harnstoff und Säure durch Auflösen von Chitosan in einer wässrigen Lösung, die Harnstoff und die Säure enthält;
b) gegebenenfalls Filtern der in Schritt a) erhaltenen Lösung, letztendlich unter Inertgas;
c) Erhitzen der Lösung aus Schritt a) oder b), die mit Inertgas gesättigt ist, in einem geschlossenen Gefäß auf eine Temperatur von wenigstens 50 °C während wenigstens 5 Stunden;
d) Abkühlen der Lösung auf Raumtemperatur (25 °C);
e) Überführen der Lösung gleichzeitig oder anschließend in einen Kunststoffbehälter, der unter Inertgas dicht verschlossen wird;
f) Einbringen des Behälters in einen Ofen und wiederum Erhitzen auf eine Temperatur von wenigstens 50 °C zum Gelieren;
g) Neutralisieren des erhaltenen Gels durch eine Base und Waschen des Gels mit Wasser, bis das Gel neutral wird;
h) mehrmaliges Waschen des Gels mit Ethanol; und
i) Einsetzen eines Standardtrocknungsverfahrens unter überkritischen Bedingungen.

4. Verfahren gemäß Anspruch 3, **dadurch gekennzeichnet, dass** eine nichtoxidierende Säure verwendet wird.

5. Verfahren gemäß Anspruch 3 oder 4, **dadurch gekennzeichnet, dass** Essigsäure, Chlorwasserstoffsäure und Phosphorsäure verwendet wird.

6. Verfahren gemäß einem der Ansprüche 3 bis 5, **dadurch gekennzeichnet, dass** eine Säurekonzentration von 0,2 bis 0,7 M relativ zu der Menge des Chitosans oder Chitins verwendet wird.

7. Verfahren gemäß einem der Ansprüche 3 bis 6, **dadurch gekennzeichnet, dass** der pH-Wert der homogenen Lösung von 0,5 kleiner als 6, insbesondere auf einen Wert von 2,0 bis 5,5, eingestellt wird.

8. Verfahren gemäß einem der Ansprüche 3 bis 7, **dadurch gekennzeichnet, dass** ein Stoffmengenverhältnis von Säure zu Harnstoff von 1:1 bis 1:≥24, insbesondere von 1:3 bis 1:18, verwendet wird.

9. Verfahren gemäß einem der Ansprüche 3 bis 8, **dadurch gekennzeichnet, dass** eine Reaktionstemperatur von 50 °C, insbesondere eine Reaktionstemperatur von 60 bis 90 °C, eingestellt wird.

10. Verwendung der Aerogele, die in Anspruch 1 oder 2 beschrieben sind oder gemäß einem der Ansprüche 3 bis 9 erhalten sind, zur Herstellung von Biomaterialien, Wärme- oder Schallisolatoren, Katalysatorträgern, antimikrobiellen Mitteln in Anwendungen wie Reinigungs- und Trenntechniken, Filtern, Klimaanlagen, Masken, Wundverbänden und medizinischem Pflaster oder Band-Aid.

11. Verwendung von Aerogelen gemäß Anspruch 10 gegen Gram-negative Bakterien und/oder gegen Gram-positive Bakterien.

## Claims

1. Aerogels of chitosan or chitin **characterized by** containing ureido functional groups.

2. The aerogels of chitosan or chitin according to claim 1, **characterized by** containing a degree of substitution of an ureido functional group in the range from 1 to 65%.

3. A process for the preparation of aerogels of chitosan or chitin by
a) preparing a homogeneous solution of a mixture of chitosan, urea and acid by dissolving chitosan in an aqueous solution containing urea and said acid,
b) optionally filtering the solution obtained in step a), eventually under inert gas,
c) heating the solution from step a) or b) saturated with inert gas in a closed vessel to a temperature of at least 50 °C for at least 5 hours,
d) cooling the solution to room temperature (25 °C),
e) transferring the solution simultaneously or sequentially to a plastic container being tightly sealed under inert gas,
f) placing said container in an oven and again heating to a temperature of at least 50 °C for gelation,
g) neutralizing the gel obtained by a base and washing the gel with water until the gel becomes neutral,
h) washing the gel several times with ethanol, and
i) employing a standard drying process under supercritical conditions.

4. The process according to claim 3, **characterized in that** a non-oxidizing acid is used.

5. The process according to claim 3 or 4, **characterized in that** acetic acid, hydrochloric acid and phosphoric acid are used.

6. The process according to any of claims 3 to 5, **characterized in that** an acid concentration of 0.2 to 0.7 M relative to the amount of said chitosan or chitin is used.

7. The process according to any of claims 3 to 6, **characterized in that** the pH value of said homogeneous solution is adjusted from 0.5 to less than 6, in particular, to a value of from 2.0 to 5.5.

8. The process according to any of claims 3 to 7, **characterized in that** a molar ratio of acid to urea of 1:1 to 1:≥24, in particular of 1:3 to 1: 18, is used.

9. The process according to any of claims 3 to 8, **characterized in that** a reaction temperature of 50 °C, in particular a reaction temperature of 60 to 90 °C, is adjusted.

10. Use of the aerogels described in claim 1 or 2 or obtained according to any of claims 3 to 9 for the fabrication of biomaterials, heat or sound insulators, catalyst supports, antimicrobial agents in applications such as purification and/or separation techniques, filters, air conditioning systems, masks, wound dressings and medical plasters or band-aids.

11. Use of aerogels according to claim 10 against Gram-negative bacteria and/or against Gram-positive bacteria.

## Revendications

1. Aérogels de chitosane ou de chitine, **caractérisés en ce qu'**ils contiennent des groupes fonctionnels uréido.

2. Aérogels de chitosane ou de chitine selon la revendication 1, **caractérisés en ce qu'**ils contiennent un degré de substitution de groupes fonctionnels uréido compris entre 1 et 65 %.

3. Procédé pour préparer des aérogels de chitosane ou de chitine par
a) préparation d'une solution homogène d'un mélange de chitosane, urée et acide en dissolvant du chitosane dans une solution aqueuse contenant de l'urée et l'acide,
b) éventuellement filtrer la solution obtenue dans l'étape a), finalement sous gaz inerte,
c) chauffage de la solution dérivée de l'étape a) ou b) et saturée avec le gaz inerte dans un récipient fermé à une température d'au moins 50 °C pendant au moins 5 heures,
d) refroidissement de la solution à la température ambiante (25 °C),
e) transfert simultané ou successif de la solution dans un récipient en plastique, qui est fermé de façon étanche sous gaz inerte,
f) introduction du récipient dans un four et chauffage de nouveau à une température d'au moins 50 °C pour gélifier,
g) neutralisation du gel obtenu par une base et lavage du gel avec de l'eau jusqu'à ce que le gel devienne neutre,
h) plusieurs lavages du gel avec de l'éthanol, et
i) application d'un procédé de séchage standard sous des conditions supercritiques.

4. Procédé selon la revendication 3, **caractérisé en ce qu'**un acide non oxydant est utilisé.

5. Procédé selon la revendication 3 ou 4, **caractérisé en ce que** l'acide acétique, l'acide chlorhydrique et l'acide phosphorique sont utilisés.

6. Procédé selon l'une quelconque des revendications 3 à 5, **caractérisé en ce qu'**une concentration d'acide de 0,2 à 0,7 M est utilisée relativement à la quantité du chitosane ou de la chitine.

7. Procédé selon l'une quelconque des revendications 3 à 6, **caractérisé en ce que** la valeur pH de la solution homogène est ajustée de 0,5 à moins de 6, notamment à une valeur de 2,0 à 5,5.

8. Procédé selon l'une quelconque des revendications 3 à 7, **caractérisé en ce qu'**un rapport molaire de l'acide à l'urée de 1 : 1 à 1 : ≥ 24, notamment de 1 : 3 à 1 : 18, est utilisé.

9. Procédé selon l'une quelconque des revendications 3 à 8, **caractérisé en ce qu'**une température de réaction de 50 °C, notamment une température de réaction de 60 à 90 °C, est ajustée.

10. Utilisation des aérogels décrits dans la revendication 1 ou 2 ou obtenus selon l'une quelconque des revendications 3 à 9 pour la préparation de biomatériaux, d'isolants thermiques ou soniques, de supports de catalyseur, d'agents antimicrobiens dans des applications comme techniques de nettoyage et de séparation, de filtres, de climatisations, de masques, de pansements et d'emplâtres médicaux, ou de sparadraps.

11. Utilisation des aérogels selon la revendication 10 contre les bactéries à Gram négatif et/ou contre les bactéries à Gram positif.
